(19) **Europäisches Patentamt European Patent Office Office européen des brevets**

(11) **EP 3 949 168 B1**

(12) **FASCICULE DE BREVET EUROPEEN**

(45) Date de publication et mention de la délivrance du brevet:
**07.06.2023 Bulletin 2023/23**

(21) Numéro de dépôt: **20731474.1**

(22) Date de dépôt: **10.06.2020**

(51) Classification Internationale des Brevets (IPC):
**H04B 7/185** (2006.01)

(52) Classification Coopérative des Brevets (CPC):
**H04B 7/18506; H04B 7/18515**

(86) Numéro de dépôt international:
**PCT/EP2020/066059**

(87) Numéro de publication internationale:
**WO 2020/249604 (17.12.2020 Gazette 2020/51)**

(54) **PROCÉDÉ ET DISPOSITIF DE RÉCEPTION D'UN MESSAGE ADS-B PAR UN SATELLITE**

VERFAHREN UND VORRICHTUNG ZUM EMPFANG EINER ADS-B-NACHRICHT ÜBER EINEN SATELLITEN

METHOD AND DEVICE FOR RECEIVING AN ADS-B MESSAGE VIA A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2019 FR 1906354**

(43) Date de publication de la demande:
**09.02.2022 Bulletin 2022/06**

(73) Titulaire: **Airbus Defence and Space SAS**
**31402 Toulouse Cedex 4 (FR)**

(72) Inventeurs:
- **MAISONNAT, Thibault**
  **31402 TOULOUSE Cedex 04 (FR)**
- **GADAT, Benjamin**
  **31402 TOULOUSE Cedex 04 (FR)**

(74) Mandataire: **Ipside**
**6, Impasse Michel Labrousse**
**31100 Toulouse (FR)**

(56) Documents cités:
**EP-A1- 2 365 355       EP-A2- 2 738 972**
**WO-A2-2008/134255    US-A1- 2018 269 955**

## Description

### Domaine de l'invention

La présente invention appartient au domaine de la surveillance de trafic aérien par satellite. Notamment, l'invention concerne un procédé et un dispositif de réception depuis l'espace de messages ADS-B (acronyme anglais pour « Automatic Dependent Surveillance-Broadcast ») émis par des avions.

### Etat de la technique

L'ADS-B est un système de surveillance pour le contrôle du trafic aérien. Chaque avion équipé d'un équipement bord ADS-B peut émettre périodiquement (par exemple toutes les secondes) un message ADS-B qui contient principalement un identifiant, une position et un cap de l'avion.

Le système ADS-B a été conçu à l'origine pour une communication entre un avion et une station au sol, ou vers les avions environnants. Le déploiement de stations au sol est impossible dans les zones océaniques et très délicat dans certaines zones terrestres difficilement accessibles ou présentant potentiellement des risques de sécurité. Le besoin d'assurer une qualité de surveillance homogène tout au long du trajet des avions conduit à considérer la collection des messages ADS-B depuis l'espace, ce qui permettra également d'ouvrir les nouvelles routes nécessaires à la prise en compte de la croissance du trafic aérien.

L'atténuation subie par des messages ADS-B reçus par un satellite est significative et provoque un impact négatif important sur le rapport signal à bruit (SNR pour « Signal-to-Noise Ratio » dans la littérature anglo-saxonne). En cas de collision de plusieurs messages ADS-B, c'est-à-dire lorsque plusieurs messages ADS-B sont émis simultanément par des avions présents dans le faisceau d'une antenne du satellite, les dispositifs de réception conventionnels ne sont généralement pas capables de détecter et/ou de décoder lesdits messages car le rapport signal sur bruit pour chaque message est trop faible. Cela rend les dispositifs conventionnels peu fiables et non applicables pour des moyens de surveillance engageant la sécurité des personnes.

Il est donc nécessaire de mettre en place des moyens spécifiques de détection et de collection des messages ADS-B. L'utilisation d'une antenne multifaisceaux limite les effets d'interférence au sein de chaque faisceau, car une diminution des dimensions d'un faisceau entraîne une diminution du nombre de collisions entre des messages émis simultanément par des avions présents dans le faisceau considéré. Toutefois, avec les dispositifs de réception conventionnels, le nombre élevé de faisceaux à utiliser est peu satisfaisant.

Les demandes de brevet WO 2008/134255 A2 et EP 2738972 A2 décrivent des méthodes de réception d'un message ADS-B. Les performances de ces méthodes ne sont cependant pas suffisantes pour détecter et synchroniser un message ADS-B lorsque le niveau de SNR est particulièrement bas.

### Exposé de l'invention

La présente invention a pour objectif de remédier à tout ou partie des inconvénients de l'art antérieur, notamment ceux exposés ci-avant, en proposant une solution permettant de synchroniser et décoder un message ADS-B transporté par un signal radio pour lequel le rapport signal sur bruit est particulièrement faible.

A cet effet, et selon un premier aspect, il est proposé par la présente invention, un procédé de réception d'un message de surveillance dépendante automatique en mode diffusion (ADS-B). Un tel message est transporté par un signal radio et comporte un préambule et un bloc de données codés par des symboles modulés par position d'impulsion. Le bloc de données comporte un code de contrôle de redondance cyclique (CRC). Le procédé de réception comporte une phase de synchronisation permettant de détecter le début du message, et une phase de décodage permettant de récupérer un train de bits correspondant au bloc de données du message.

La phase de synchronisation comporte :

- un échantillonnage du signal radio avec une fréquence d'échantillonnage au moins égale à deux fois la fréquence d'émission des symboles du message,
- pour chaque échantillon d'un nombre prédéterminé d'échantillons successifs, une détermination d'une séquence de rapports de vraisemblance logarithmiques, chaque rapport de vraisemblance logarithmique correspondant à un rapport entre les probabilités respectives qu'un symbole du signal reçu corresponde à une parmi deux valeurs possibles pour un symbole, chaque séquence étant déterminée en faisant l'hypothèse que ledit échantillon correspond au début du message,
- une sélection de séquences candidates en fonction des valeurs de rapports de vraisemblance logarithmiques desdites séquences ainsi déterminées, chaque séquence candidate étant associée à un échantillon candidat pouvant correspondre au début du message,

- pour chaque séquence candidate sélectionnée, un calcul d'une valeur de vraisemblance entre ladite séquence candidate et une séquence attendue de symboles du préambule,
- une détermination en fonction des valeurs de vraisemblance ainsi calculées, d'un échantillon, dit « échantillon de départ », correspondant au début du message.

La phase de décodage comporte :

- une détermination, à partir de l'échantillon de départ, d'une séquence de rapports de vraisemblance logarithmiques associés respectivement aux symboles du bloc de données du message,
- un ordonnancement de ladite séquence de rapports de vraisemblance logarithmiques associés aux symboles du bloc de données par ordre croissant en valeur absolue,
- une permutation des colonnes d'une matrice de parité du code de contrôle de redondance cyclique, ladite permutation étant réalisée de façon cohérente avec les permutations effectuées pour ordonner la séquence de rapports de vraisemblance logarithmiques, afin d'obtenir une matrice dite « matrice permutée »,
- une transformation de la matrice permutée par réduction sous forme échelonnée d'une sous-partie de ladite matrice permutée, afin d'obtenir une matrice dite « matrice transformée »,
- une permutation inverse des colonnes de la matrice transformée pour remettre les colonnes dans leur ordre initial, afin d'obtenir une matrice dite « matrice de parité optimisée »,
- une application d'un algorithme de propagation des croyances utilisant la matrice de parité optimisée et la séquence de rapports de vraisemblance logarithmiques associés aux symboles du bloc de données pour déterminer un train de bits correspondant au bloc de données du message.

Pour des faibles niveaux de rapport sur bruit (par exemple inférieurs à 13 dB), la phase de synchronisation du procédé de réception selon l'invention présente de meilleures performances de détection d'un message ADS-B que des méthodes conventionnelles basées sur une corrélation de signal.

Les différentes étapes de la phase de décodage du procédé de réception selon l'invention permettent d'optimiser la matrice de parité du code de contrôle de redondance cyclique en réduisant sa densité, de telle sorte qu'il devient possible d'utiliser un algorithme de propagation des convictions pour corriger d'éventuelles erreurs pendant le décodage du bloc de données du message. Un code de contrôle de redondance cyclique n'est conventionnellement pas bien adapté pour l'utilisation d'un tel algorithme car la matrice de parité qui lui est associée est trop dense.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, pendant la phase de synchronisation, les séquences candidates sélectionnées correspondent aux séquences comportant les plus grandes valeurs absolues de rapports de vraisemblance logarithmiques parmi tous les rapports de vraisemblance logarithmiques de toutes les séquences déterminées.

Dans des modes particuliers de mise en oeuvre, pendant la phase de synchronisation, les séquences candidates sélectionnées correspondent aux séquences pour lesquelles les sommes des valeurs absolues des rapports de vraisemblance logarithmiques sont les plus grandes.

Dans des modes particuliers de mise en oeuvre, l'échantillon de départ est déterminé comme étant l'échantillon associé à la séquence candidate pour laquelle la valeur de vraisemblance calculée est la plus grande.

Dans des modes particuliers de mise en oeuvre, la phase de synchronisation du procédé de réception comporte en outre une discrimination entre différentes séquences candidates en exploitant des parties du préambule ne comportant pas d'impulsion.

Dans des modes particuliers de mise en oeuvre, la discrimination entre différentes séquences candidates comporte un calcul d'une somme, pour chaque séquence candidate :

- pour chaque symbole de ladite séquence candidate supposé correspondre à un symbole du préambule ne comportant pas d'impulsion, des valeurs de la moitié des échantillons ayant les plus grandes valeurs,
- pour chaque symbole de ladite séquence candidate supposé correspondre à un symbole du préambule comportant une impulsion, des valeurs de la moitié des échantillons ayant les plus faibles valeurs,
- les séquences candidates pour lesquelles les sommes ainsi calculées sont les plus faibles étant considérées comme les plus vraisemblables.

Dans des modes particuliers de mise en oeuvre, la phase de décodage du procédé de réception comporte en outre une discrimination entre différents trains de bits possibles obtenus en sortie de l'algorithme de propagation des croyances pour le bloc de données du message en fonction de la distance de Hamming entre un train de bits possible et un train de bits correspondant à la séquence de rapports de vraisemblance logarithmiques associés aux symboles du bloc de données.

Selon un deuxième aspect, la présente invention concerne un dispositif de réception d'un message de surveillance dépendante automatique en mode diffusion (ADS-B). Un tel message est transporté par un signal radio et comporte un préambule et un bloc de données codés par des symboles modulés par position d'impulsion. Le bloc de données comporte un code de contrôle de redondance cyclique (CRC). Le dispositif de réception comporte un module de synchronisation configuré pour détecter le début du message, et un module de décodage configuré pour récupérer un train de bits correspondant au bloc de données du message.

Le module de synchronisation est configuré pour :

- échantillonner le signal radio avec une fréquence d'échantillonnage au moins égale à deux fois la fréquence d'émission des symboles du message,
- pour chaque échantillon d'un nombre prédéterminé d'échantillons successifs, déterminer une séquence de rapports de vraisemblance logarithmiques, chaque rapport de vraisemblance logarithmique correspondant à un rapport entre les probabilités respectives qu'un symbole du signal reçu corresponde à une parmi deux valeurs possibles pour un symbole, chaque séquence étant déterminée en faisant l'hypothèse que ledit échantillon correspond au début du message,
- sélectionner des séquences candidates en fonction des valeurs de rapports de vraisemblance logarithmiques desdites séquences ainsi déterminées, chaque séquence candidate étant associée à un échantillon candidat pouvant correspondre au début du message,
- pour chaque séquence candidate sélectionnée, calculer une valeur de vraisemblance entre ladite séquence candidate et une séquence attendue de symboles du préambule,
- déterminer en fonction des valeurs de vraisemblance ainsi calculées, un échantillon, dit « échantillon de départ », correspondant au début du message.

Le module de décodage est configuré pour :

- déterminer, à partir de l'échantillon de départ, une séquence de rapports de vraisemblance logarithmiques associés respectivement aux symboles du bloc de données du message,
- ordonner la séquence de rapports de vraisemblance logarithmiques associés aux symboles du bloc de données par ordre croissant en valeur absolue,
- permuter des colonnes d'une matrice de parité du code de contrôle de redondance cyclique, ladite permutation étant réalisée de façon cohérente avec les permutations effectuées pour ordonner la séquence de rapports de vraisemblance logarithmiques, afin d'obtenir une matrice dite « matrice permutée »,
- transformer la matrice permutée par une réduction sous forme échelonnée d'une sous-partie de la matrice permutée, afin d'obtenir une matrice dite « matrice transformée »,
- permuter à l'inverse les colonnes de la matrice transformée pour remettre les colonnes dans leur ordre initial, afin d'obtenir une matrice dite « matrice de parité optimisée »,
- appliquer un algorithme de propagation des croyances utilisant la matrice de parité optimisée et la séquence de rapports de vraisemblance logarithmiques pour déterminer un train de bits correspondant au bloc de données du message.

**Présentation des figures**

L'invention sera mieux comprise à la lecture de la description suivante, donnée à titre d'exemple nullement limitatif, et faite en se référant aux figures 1 à 17 qui représentent :

[Fig. 1] la figure 1 représente schématiquement la réception par un satellite d'un message ADS-B émis par un avion,
[Fig. 2] la figure 2 représente schématiquement un dispositif de réception d'un message ADS-B selon l'invention,
[Fig. 3] la figure 3 représente schématiquement les principales étapes d'un procédé de réception d'un message ADS-B selon l'invention,
[Fig. 4] la figure 4 représente schématiquement la structure d'un message ADS-B, [Fig. 5] la figure 5 représente schématiquement une valeur possible d'un symbole d'un message ADS-B,
[Fig. 6] la figure 6 représente schématiquement une autre valeur possible d'un symbole d'un message ADS-B,
[Fig. 7] la figure 7 représente schématiquement les différents symboles d'un préambule d'un message ADS-B,
[Fig. 8] la figure 8 représente schématiquement des échantillons d'un signal transportant un message ADS-B ainsi que des séquences de rapports de vraisemblance logarithmiques calculés à partir de ces échantillons,
[Fig. 9] la figure 9 représente schématiquement les échantillons d'un filtre adapté associé au symbole représenté à la figure 5,

[Fig. 10] la figure 10 représente schématiquement les échantillons d'un filtre adapté associé au symbole représenté à la figure 6,

[Fig. 11] la figure 11 représente schématiquement les principales étapes d'un mode particulier de mise en oeuvre de la phase de synchronisation du procédé de réception selon l'invention,

[Fig. 12] la figure 12 représente schématiquement la structure d'un bloc de données d'un message ADS-B,

[Fig. 13] la figure 13 représente schématiquement la matrice de parité du code de redondance cyclique d'un message ADS-B,

[Fig. 14] la figure 14 représente schématiquement un graphe biparti sur lequel repose un algorithme de propagation des croyances utilisé dans la phase de décodage du procédé de réception selon l'invention,

[Fig. 15] la figure 15 représente schématiquement les principales étapes d'un mode particulier de mise en oeuvre de la phase de décodage du procédé de réception selon l'invention,

[Fig. 16] la figure 16 représente le taux de synchronisation correcte d'un message ADS-B en fonction du rapport signal sur bruit pour le procédé de réception selon l'invention et pour une méthode conventionnelle,

[Fig. 17] la figure 17 représente le taux d'erreur de décodage d'un message ADS-B en fonction du rapport signal sur bruit pour le procédé de réception selon l'invention et pour une méthode conventionnelle.

Dans ces figures, des références identiques d'une figure à une autre désignent des éléments identiques ou analogues. Pour des raisons de clarté, les éléments représentés ne sont pas nécessairement à une même échelle, sauf mention contraire.

## Description détaillée d'un mode de réalisation de l'invention

Tel qu'indiqué précédemment, la présente invention vise notamment à proposer une solution permettant de synchroniser et décoder un message ADS-B transporté par un signal radio pour lequel le rapport signal sur bruit est particulièrement faible.

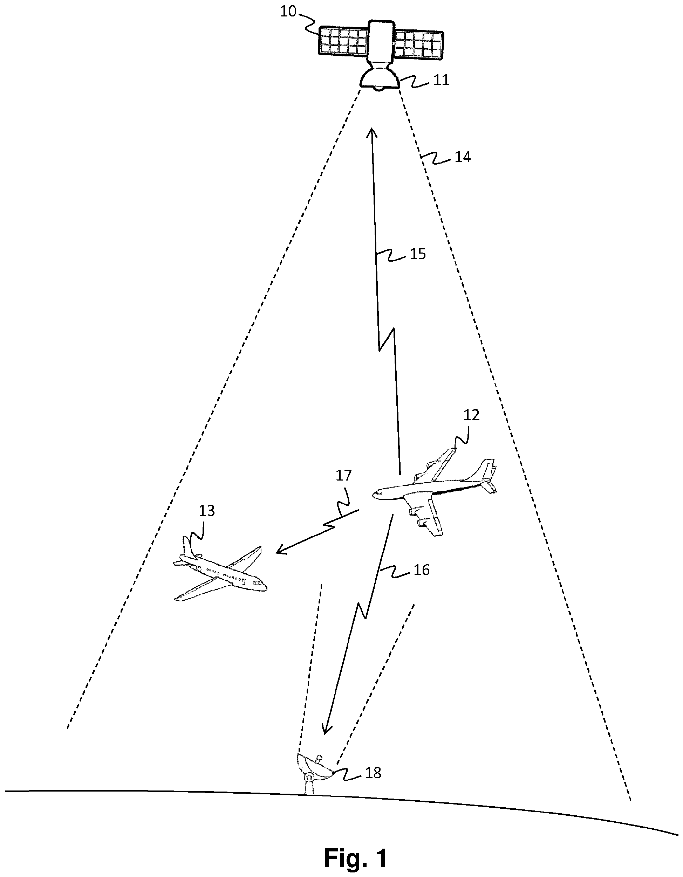

La figure 1 représente schématiquement un satellite 10 placé en orbite autour de la Terre et comportant une charge utile adaptée pour recevoir sur un lien 15 de communication un signal radio transportant un message de surveillance dépendante automatique en mode diffusion (ADS-B) émis par un avion 12. Dans la suite de la description, on considère à titre d'exemple nullement limitatif que le satellite 10 est placé en orbite terrestre basse (« Low Earth Orbit » ou LEO dans la littérature anglo-saxonne). Une orbite terrestre basse est une zone de l'orbite terrestre allant jusqu'à 2000 kilomètres. Un satellite évoluant en orbite terrestre basse bénéficie pour le lien 15 de communication d'un meilleur bilan de liaison qu'un satellite évoluant en orbite terrestre moyenne (« Medium Earth Orbit » ou MEO, orbite située entre 2000 et 35786 kilomètres d'altitude) ou qu'un satellite évoluant en orbite géostationnaire (« Geostationary orbit » ou GEO, orbite située dans le plan équatorial à 35786 kilomètres d'altitude).

La charge utile du satellite 10 comporte une antenne 11 configurée pour recevoir le signal radio transportant le message ADS-B. L'antenne 11 peut par exemple comporter, de manière conventionnelle, un réseau d'antennes permettant de former plusieurs faisceaux.

Comme expliqué précédemment, la distance séparant le satellite 10 de l'avion 12 et le nombre potentiellement important de collisions entre le message émis par l'avion 12 et d'autres messages émis simultanément par d'autres avions et captés par le même faisceau 14 ont pour conséquence que le rapport signal sur bruit (SNR) est généralement beaucoup plus faible pour un signal radio transportant un message ADS-B reçu par le satellite 10 que pour le même signal radio reçu par une station au sol 18 sur un lien 16 de communication avion-station, ou pour le même signal radio reçu par un autre avion 13 sur un lien 17 de communication avion-avion.

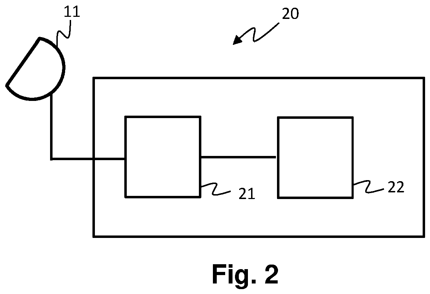

La charge utile du satellite 10 comporte un dispositif de réception d'un message ADS-B. La figure 2 représente schématiquement un tel dispositif 20 de réception. Le dispositif 20 de réception comporte notamment un module 21 de synchronisation configuré pour détecter le début d'un message ADS-B, et un module 22 de décodage configuré pour récupérer un train de bits correspondant à un bloc de données du message ADS-B.

A cet effet, le module 21 de synchronisation et le module 22 de décodage comportent par exemple un circuit de traitement (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les étapes d'un procédé de réception d'un message ADS-B. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes.

Le dispositif 20 de réception est relié à l'antenne 11 du satellite et comporte en outre un circuit radioélectrique (non représenté sur les figures) comportant des équipements (amplificateur, oscillateur local, mélangeur, filtre analogique, convertisseur analogique/numérique, etc.) connus de l'homme de l'art, permettant audit dispositif 20 de réception de recevoir des messages sous la forme de signaux radio.

En d'autres termes, le circuit radioélectrique, le module 21 de synchronisation et le module 22 de décodage correspondent à des moyens du dispositif 20 de réception qui sont configurés de façon logicielle (produit programme d'ordinateur spécifique) et/ou matérielle (FPGA, PLD, ASIC, composants électroniques discrets, etc.) pour mettre en oeuvre les étapes d'un procédé de réception d'un message ADS-B.

Dans l'exemple considéré, le module 21 de synchronisation et le module 22 de décodage d'une chaîne de réception correspondant à un faisceau d'antenne sont réalisés sur des circuits logiques programmables de type FPGA. Le circuit FPGA peut comporter plusieurs chaines de réception. En particulier, dans l'exemple considéré, le circuit FPGA comporte neuf chaînes de réception correspondant respectivement à neuf faisceaux différents, et la charge utile du satellite 10 comporte quatre tels circuits FPGA afin de supporter trente-six faisceaux différents en tout.

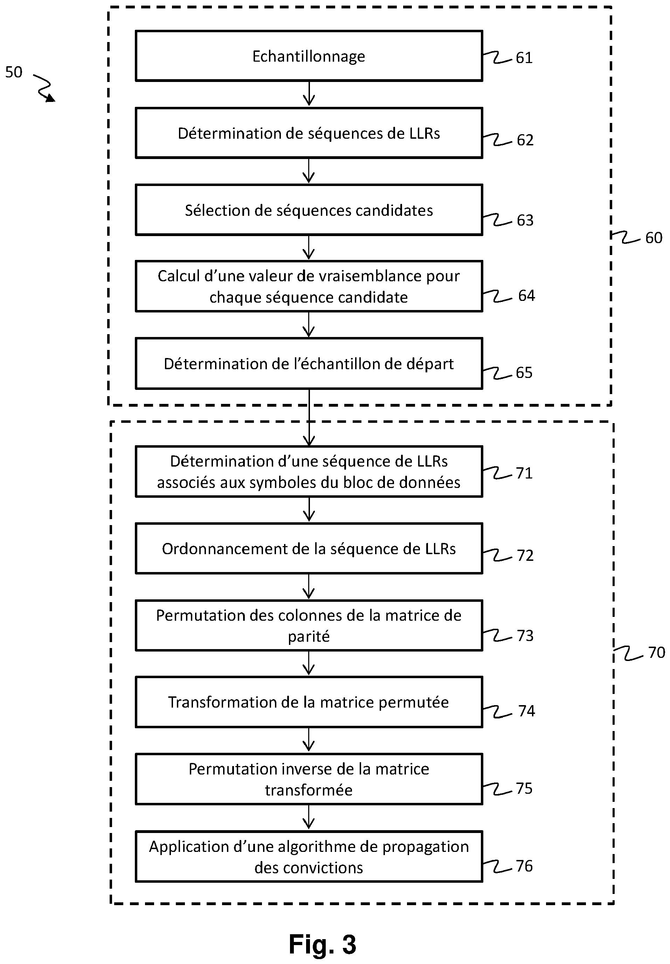

La figure 3 représente schématiquement les principales étapes d'un procédé 50 de réception d'un message ADS-B par le dispositif 20 de réception. Le procédé 50 comporte notamment une phase 60 de synchronisation permettant de détecter le début du message et une phase 70 de décodage permettant de récupérer un train de bits correspondant à un bloc de données du message. Les étapes de la phase 60 de synchronisation sont mises en oeuvre par le module 21 de synchronisation. Les étapes de la phase 70 de décodage sont mises en oeuvre par le module 22 de décodage.

La phase 60 de synchronisation comporte notamment les étapes suivantes :

- un échantillonnage 61 du signal radio avec une fréquence d'échantillonnage au moins égale à deux fois la fréquence d'émission des symboles du message,
- pour chaque échantillon d'un nombre prédéterminé d'échantillons successifs, une détermination 62 d'une séquence de rapports de vraisemblance logarithmiques, chaque rapport de vraisemblance logarithmique correspondant à un rapport entre les probabilités respectives qu'un symbole du signal reçu corresponde à une parmi deux valeurs possibles pour un symbole, chaque séquence étant déterminée en faisant l'hypothèse que ledit échantillon correspond au début du message,
- une sélection 63 de séquences candidates en fonction des valeurs de rapports de vraisemblance logarithmiques desdites séquences ainsi déterminées, chaque séquence candidate étant associée à un échantillon candidat pouvant correspondre au début du message,
- pour chaque séquence candidate sélectionnée, un calcul 64 d'une valeur de vraisemblance entre ladite séquence candidate et une séquence attendue de symboles du préambule,
- une détermination 65, en fonction des valeurs de vraisemblance ainsi calculées, d'un échantillon, dit « échantillon de départ », correspondant au début du message.

La phase 70 de décodage comporte notamment les étapes suivantes :

- une détermination 71, à partir de l'échantillon de départ, d'une séquence de rapports de vraisemblance logarithmiques associés respectivement aux symboles du bloc de données du message,
- un ordonnancement 72 de la séquence de rapports de vraisemblance logarithmiques associés aux symboles du bloc de données par ordre croissant en valeur absolue,
- une permutation 73 des colonnes d'une matrice de parité du code de contrôle de redondance cyclique, ladite permutation 73 étant réalisée de façon cohérente avec les permutations effectuées pour ordonner la séquence de rapports de vraisemblance logarithmiques, afin d'obtenir une matrice dite « matrice permutée »,
- une transformation 74 de la matrice permutée par réduction sous forme échelonnée d'une sous-partie de ladite matrice permutée afin d'obtenir une matrice dite « matrice transformée »,
- une permutation inverse 75 des colonnes de la matrice transformée pour remettre les colonnes dans leur ordre initial, afin d'obtenir une matrice dite « matrice de parité optimisée »,
- une application 76 d'un algorithme de propagation des croyances utilisant la matrice de parité optimisée et la séquence de rapports de vraisemblance logarithmiques pour déterminer un train de bits correspondant au bloc de données du message.

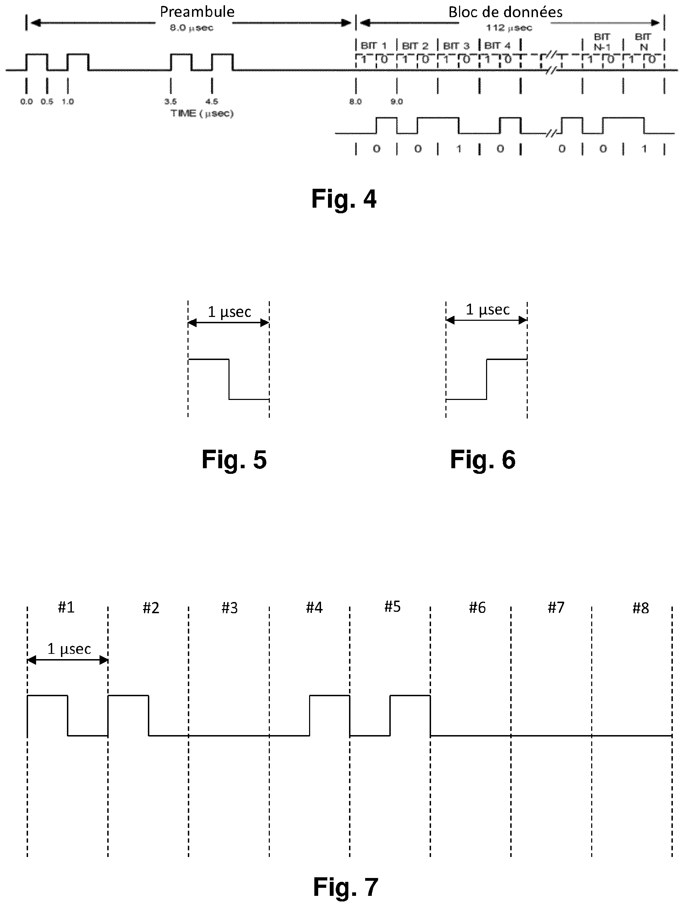

La figure 4 représente schématiquement la structure d'un message ADS-B. Le message comporte un préambule et un bloc de données. Le préambule et le bloc de données sont codés par des symboles modulés par position d'impulsion (« Pulse-Position Modulation » ou PPM dans la littérature anglo-saxonne).

Tel qu'illustré sur les figures 5 et 6, un symbole correspond par exemple à une transition d'un signal d'un état haut vers un état bas, ou bien à une transition du signal d'un état bas vers un état haut. La figure 5 représente un symbole correspondant à une transition du signal d'un état haut vers un état bas. Le symbole a une durée d'une microseconde (1 $\mu$s). Le signal correspondant à ce symbole comporte une impulsion pendant la première moitié de la durée du symbole, et une absence d'impulsion pendant la seconde moitié de la durée du symbole (autrement dit, le signal prend une valeur positive constante pendant la première moitié de la durée du symbole, et une valeur nulle pendant la seconde moitié de la durée du symbole). La figure 6 représente un symbole correspondant à une transition du signal d'un état bas vers un état haut. Le signal correspondant à ce symbole comporte une absence d'impulsion pendant la première moitié de la durée du symbole, et une impulsion pendant la seconde moitié de la durée du symbole (autrement dit, le signal prend une valeur nulle pendant la première moitié de la durée du symbole, et une valeur positive constante pendant la seconde moitié de la durée du symbole). Une valeur peut être associée à chaque symbole. Par exemple, la valeur 1 peut être associée au symbole représenté à la figure 5 et la valeur -1 peut être associée au symbole représenté à la figure 6.

La figure 7 représente le préambule d'un message ADS-B. Le préambule a une durée de huit microsecondes (8 $\mu$s). Le préambule comporte huit symboles. Les symboles #1 et #2 correspondent au symbole représenté à la figure 5. Les symboles #4 et #5 correspondent au symbole représenté à la figure 6. Les symboles #3, #6, #7 et #8 ne comportent quant à eux aucune impulsion sur la durée du symbole (autrement dit, le signal garde une valeur nulle pendant la durée du symbole). La valeur 0 peut par exemple être associé à ces symboles qui ne comportent pas d'impulsion.

Dans l'exemple considéré, et tel qu'illustré sur la figure 4, le bloc de données a une durée de cent douze microsecondes (112 $\mu$s). Le bloc de données correspond à un train de 112 bits, chaque bit étant un élément binaire prenant la valeur 0 ou la valeur 1. Dans l'exemple considéré, un bit de valeur 1 est codé par le symbole de valeur 1 représenté à la figure 5, et un bit de valeur 0 est codé par le symbole de valeur -1 représenté à la figure 6. Contrairement au préambule, le bloc de données ne comporte pas de symboles de valeur 0 dépourvus d'impulsion. Parmi les 112 bits du bloc de données, 88 bits correspondent à des données utiles, et 24 bits correspondent à un code de contrôle de redondance cyclique (« Cyclic Redundancy Check » ou CRC dans la littérature anglo-saxonne). Le code de contrôle de redondance cyclique est conventionnellement utilisé pour vérifier l'intégrité du bloc de données après décodage (c'est-à-dire pour vérifier que le train de bits décodés pour le message ADS-B reçu par un récepteur correspond bien au train de bits émis par un émetteur).

Le signal radio transportant le message ADS-B est par exemple transmis sur une fréquence porteuse de 1090 MHz. Une impulsion correspond alors à une période d'une durée de 0,5 $\mu$s pendant laquelle la fréquence porteuse est émise avec une certaine puissance. Une absence d'impulsion correspond à une période pendant laquelle la fréquence porteuse n'est pas émise. Le signal radio reçu par le dispositif 20 récepteur est alors ramené en bande de base et échantillonné, de manière conventionnelle, par le module 21 de synchronisation.

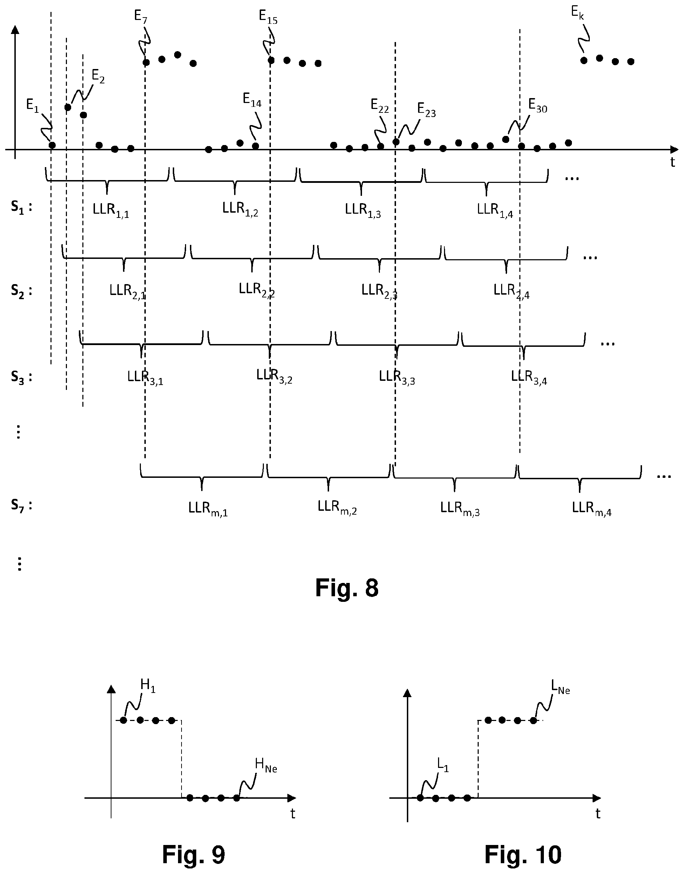

L'étape d'échantillonnage 61 du signal radio permet d'obtenir des échantillons $E_k$ tels qu'illustrés sur la figure 8. L'amplitude des échantillons est représentée en ordonnée et le temps est représenté en abscisse. L'échantillonnage est réalisé avec une fréquence d'échantillonnage au moins égal au double de la fréquence d'émission des symboles du message (facteur de sur-échantillonnage au moins égal à deux). En bande de base, les symboles du message sont émis à une fréquence de 1 MHz (un symbole par microseconde). Dans un mode préféré de mise en oeuvre, le facteur de sur-échantillonnage est égal à huit, c'est-à-dire que la fréquence d'échantillonnage est égal à huit fois la fréquence d'émission des symboles du message. Autrement dit, huit échantillons sont obtenus pour chaque symbole. Dans l'exemple considéré, la fréquence d'échantillonnage est alors de 8 MHz. Dans la suite de la description, et tel qu'illustré à la figure 8, on considère à titre d'exemple nullement limitatif que le facteur de sur-échantillonnage est égal à huit.

La phase 60 de synchronisation a pour objectif de détecter l'échantillon, dit « échantillon de départ » qui correspond au premier échantillon du premier symbole du préambule du message ADS-B. Dans l'exemple illustré à la figure 8, l'échantillon de départ est l'échantillon $E_7$. Les échantillons $E_7$ à $E_{14}$ correspondent au premier symbole du préambule, les échantillons $E_{15}$ à $E_{22}$ correspondent au deuxième symbole du préambule, les échantillons $E_{24}$ à $E_{30}$ correspondent au troisième symbole du préambule, etc.

Il convient de noter qu'une étape de détection de puissance peut précéder la phase 60 de synchronisation. Une fenêtre temporelle glissante d'une durée prédéterminée est par exemple utilisée. Par transformée de Fourier, il est alors possible de déterminer, pour ladite fenêtre temporelle, une densité spectrale de puissance dans une bande de fréquences d'intérêt, par exemple dans une bande de 8 MHz de large centrée sur la fréquence porteuse de 1090 MHz du signal radio. Si la densité spectrale de puissance est supérieure à un seuil prédéterminé, alors une phase 60 de synchronisation est déclenchée sur la partie du signal comprise dans cette fenêtre temporelle.

A l'étape 62, pour chaque échantillon d'un nombre prédéterminé d'échantillons successifs, une séquence de rapports de vraisemblance logarithmiques est déterminée. Sur la figure 8, la séquence $S_1$ est associée à l'échantillon $E_1$, la séquence $S_2$ est associée à l'échantillon $E_2$, la séquence $S_3$ est associée à l'échantillon $E_3$, ..., la séquence $S_7$ est associée à l'échantillon $E_7$, etc. Chaque séquence comporte des rapports de vraisemblance logarithmiques (LLR pour « Log-Likelihood Ratio » dans la littérature anglo-saxonne) pour des symboles successifs déterminés en faisant l'hypothèse que l'échantillon auquel est associée ladite séquence correspond au début du message. Chaque symbole correspond à huit échantillons successifs.

Chaque rapport de vraisemblance logarithmique correspond à un rapport entre la probabilité qu'un symbole du signal reçu corresponde au symbole de valeur 1 représenté à la figure 5 et la probabilité que ledit symbole corresponde au symbole de valeur -1 représenté à la figure 6.

Dans la suite de la description, on note $N_e$ le nombre d'échantillon par symbole ($N_e$ est le facteur de sur-échantillonnage, $N_e = 8$ dans l'exemple considéré). Ainsi, l'élément d'indice j dans la séquence $S_i$ d'indice i correspond au rapport de vraisemblance logarithmique LRR$_{i,j}$ tel que :

[Math. 1]

$$LLR_{i,j} = Log\left(\frac{P^1_{i,j}}{P^{-1}_{i,j}}\right)$$

$P^1_{i,j}$ est la probabilité que le symbole correspondant aux N$_e$ échantillons E$_{i+(j-1).Ne}$ à E$_{i+j.Ne-1}$ correspondent à un symbole de valeur 1.

$P^{-1}_{i,j}$ est la probabilité que le symbole correspondant aux N$_e$ échantillons E$_{i+(j-i).Ne}$ à E$_{i+j.Ne-1}$ correspondent à un symbole de valeur -1.

Les figures 9 et 10 représentent respectivement les filtres adaptés (« matched filters ») pour les symboles de valeur 1 et -1. Les échantillons H$_1$ à H$_{Ne}$ représentent ainsi un gabarit du symbole de valeur 1 et les échantillons L$_1$ à L$_{Ne}$ représentent un gabarit du symbole de valeur -1. Les probabilités $P^1_{i,j}$ et $P^{-1}_{i,j}$ peuvent alors s'écrire sous la forme :

[Math. 2]

$$P^1_{i,j} = \frac{1}{C} \cdot \sum_{k=1}^{N_e} E_{i+(j-1)\cdot N_e+(k-1)} \cdot H_k$$

[Math. 3]

$$P^{-1}_{i,j} = \frac{1}{C} \cdot \sum_{k=1}^{N_e} E_{i+(j-1)\cdot N_e+(k-1)} \cdot L_k$$

où C est une constante de normalisation.

Le signe positif ou négatif du rapport de vraisemblance logarithmique LLR$_{i,j}$ indique si le symbole observé a pour valeur 1 ou -1. Plus la valeur absolue du rapport de vraisemblance logarithmique LLR$_{i,j}$ est grand et plus cela signifie que la confiance dans la décision sur la valeur du symbole est forte.

Pendant cette phase 60 de synchronisation, le nombre de séquences S$_i$ considérées correspond au nombre d'échantillons successifs considérés. Le nombre de rapports de vraisemblance logarithmiques LLR$_{i,j}$ compris dans chaque séquence S$_i$ peut par exemple correspondre au nombre N$_p$ de symboles du préambule (N$_p$ = 8). Le nombre de séquences S$_i$ considérées peut par exemple être égal à N$_p$ $\times$ N$_e$, c'est-à-dire soixante-quatre dans l'exemple considéré (N$_p$ $\times$ N$_e$ = 64).

A l'étape 63, des séquences candidates sont sélectionnées parmi les différentes séquences Si ainsi déterminées. La sélection est effectuée en fonction des valeurs de rapports de vraisemblance logarithmiques LLR$_{i,j}$ desdites séquences. Tel qu'indiqué précédemment, chaque séquence candidate S$_j$ est associée à un échantillon E$_j$ candidat pouvant correspondre au début du message.

Dans des modes particuliers de mise en oeuvre, les séquences candidates sélectionnées correspondent aux séquences comportant les plus grandes valeurs absolues de rapports de vraisemblance logarithmiques parmi tous les rapports de vraisemblance logarithmiques de toutes les séquences déterminées.

Dans des modes particuliers de mise en oeuvre, les séquences candidates sélectionnées correspondent aux séquences pour lesquelles les sommes des valeurs absolues des rapports de vraisemblance logarithmiques sont les plus grandes.

Le nombre de séquences candidates sélectionnées au cours de l'étape 63 n'est pas nécessairement figé. Ce nombre peut être adapté en fonction des résultats obtenus pour les rapports de vraisemblance logarithmiques des différentes séquences. Par exemple, une séquence Si est sélectionnée en tant que séquence candidate seulement si la valeur maximale parmi les valeurs absolues des rapports de vraisemblance logarithmiques LLR$_{i,j}$ est supérieure à un seuil prédéfini, ou bien si la somme des valeurs absolues des rapports de vraisemblance logarithmiques est supérieure à un seuil prédéfini. Dans une variante, le nombre de séquence candidates sélectionnées peut être prédéfini à une valeur fixe.

A l'étape 64, pour chaque séquence candidate ainsi sélectionnée, une valeur de vraisemblance est calculée entre ladite séquence candidate et une séquence attendue de symboles du préambule.

Une séquence Si de rapport de vraisemblance logarithmiques peut s'écrire sous la forme :

$$S_i = (LLR_{i,1}, LLR_{i,2}, LLR_{i,3}, \ldots, LLR_{i,Np})$$

La séquence attendue Seq de symboles du préambule peut s'écrire sous la forme :

$$Seq = (Seq_1, Seq_2, Seq_3, \ldots, Seq_{Np}) = (1, ,1, 0, -1, -1, 0, 0, 0)$$

La valeur de vraisemblance $LV_i$ entre une séquence candidate $S_i$ et la séquence attendue Seq de symboles du préambule peut par exemple être calculée comme suit :

[Math. 4]

$$LV_i = \sum_{k=1}^{N_p} Seq_k \cdot LLR_{i,k}$$

A l'étape 65, l'échantillon de départ correspondant au début du message est déterminé en fonction des valeurs de vraisemblance $LV_i$ ainsi calculées.

Dans des modes particuliers de mise en oeuvre, l'échantillon de départ est déterminé comme étant l'échantillon associé à la séquence candidate Si pour laquelle la valeur de vraisemblance $LV_i$ calculée est la plus grande.

Avec de telles dispositions, la phase 60 de synchronisation permet de détecter le début d'un message ADS-B dans 99% des cas lorsque le rapport signal sur bruit vaut environ 11 dB. Un tel taux de détection du début d'un message ADS-B n'est atteint par les méthodes conventionnelles de l'art antérieur que pour un rapport signal sur bruit supérieur à 13 dB. Le procédé 50 selon l'invention permet donc un gain de 2 dB par rapport aux méthodes de l'art antérieur pour synchroniser un message ADS-B.

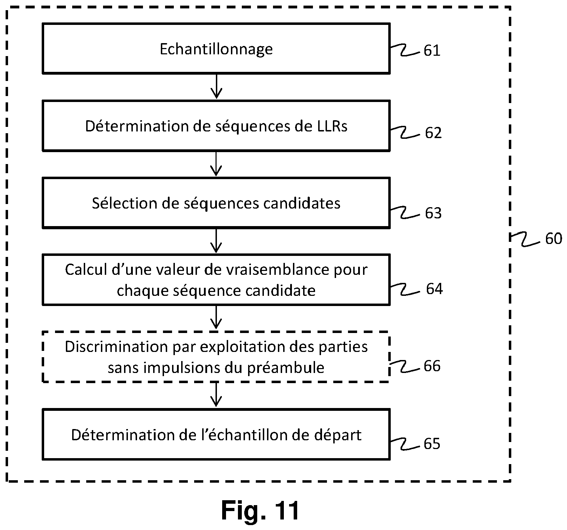

La figure 11 représente un mode particulier de mise en oeuvre de la phase 60 de synchronisation. Outre les étapes déjà décrites précédemment en référence à la phase 60 de synchronisation représentée à la figure 3, la phase 60 de synchronisation représentée à la figure 11 comporte une étape supplémentaire de discrimination 66 entre plusieurs séquences candidates en exploitant des parties du préambule qui ne comportent pas d'impulsion.

Les parties du préambule qui ne comportent pas d'impulsion correspondent d'une part aux symboles #3, #6, #7 et #8 du préambule ainsi qu'aux moitiés des symboles #1, #2, #4 et #5 qui ne comportent pas d'impulsion (voir figures 7).

Cette étape de discrimination 66 comporte par exemple le calcul d'une somme des éléments suivants pour chaque séquence candidate :

- pour chaque symbole de la séquence candidate supposé correspondre à un symbole du préambule ne comportant pas d'impulsion (symboles #3, #6, #7 et #8), les valeurs de la moitié des échantillons ayant les plus grandes valeurs,
- pour chaque symbole de la séquence candidate supposé correspondre à un symbole du préambule comportant une impulsion (symboles #1, #2, #4 et #5), les valeurs de la moitié des échantillons ayant les plus faibles valeurs.

Les séquences candidates pour lesquelles les sommes ainsi calculées sont les plus faibles sont considérées comme les plus vraisemblables. Cette étape supplémentaire de discrimination 63 permet d'améliorer encore davantage les performances du dispositif 20 de réception pendant la phase 60 de synchronisation.

Une fois que l'échantillon de départ correspondant au début du message ADS-B est déterminé, la phase 70 décodage du train binaire correspondant au bloc de données du message peut commencer. La phase 70 de décodage du procédé 50 de réception selon l'invention comporte notamment une correction d'erreurs basée sur un algorithme de propagation des croyances qui utilise le code de contrôle de redondance cyclique (CRC).

L'algorithme de propagation des croyances (« Belief Propagation » dans la littérature anglo-saxonne), aussi connu sous le terme de transmission de message somme-produit (« Sum-Product algorithm »), est un algorithme connu de décodage permettant de récupérer l'information utile d'un message reçu. Il s'agit d'un algorithme de type itératif particulièrement bien adapté aux codes correcteurs d'erreurs linéaires pour lesquels la matrice de parité a une densité faible (c'est-à-dire une matrice de parité dont les éléments sont très majoritairement des 0, et très minoritairement des 1, par exemple la proportion de 1 sur l'ensemble des éléments de la matrice est de l'ordre de $10^{-3}$). L'algorithme de propagation des croyances est notamment bien adapté aux codes de type LDPC (acronyme anglais pour « Low-Density Parity Check code »).

Un code de contrôle de redondance cyclique (CRC) est conventionnellement utilisé pour vérifier l'intégrité de données transmises, et non pas pour corriger des erreurs apparues dans la transmission des données. Un code CRC présente généralement une matrice de parité dense, et un tel code n'est pas bien adapté pour l'utilisation d'un algorithme de propagation des croyances. Toutefois, la phase 70 de décodage du procédé 50 de réception selon l'invention comporte des étapes permettant de transformer la matrice de parité du code CRC d'un message ADS-B de telle sorte que l'utilisation de l'algorithme de propagation des croyances devient possible.

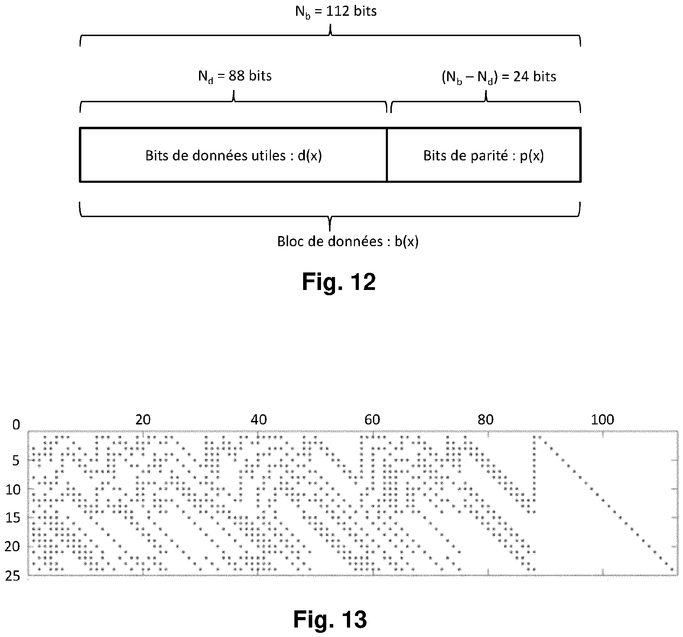

De manière conventionnelle, un code CRC est associé à un polynôme générateur g(x) qui est connu aussi bien de l'émetteur que du récepteur d'un message. Pour des données utiles d(x), les bits de parité p(x) du CRC correspondent au reste de la division desdites données utiles par le polynôme générateur : p(x) = d(x) / g(x). Pour rappel, dans l'exemple considéré, et tel qu'illustré à la figure 12, il y a 88 bits de données d(x) et 24 bits de parité p(x). Un bloc de données b(x) de 112 bits correspond alors à la concaténation des 88 bits de données utiles avec les 24 bits de parité. Il est alors possible de détecter la présence d'erreur à la réception d'un message en comparant le reste de la division du bloc de données reçu b'(x) par g(x). Si le reste n'est pas nul, alors cela signifie qu'une erreur est détectée.

Dans le cas de l'ADS-B, le polynôme générateur du CRC est :

[Math. 5]

$$g(x) = 1 + x^3 + x^{10} + x^{12} + x^{13} + x^{14} + x^{15} + x^{16} + x^{17} + x^{18} + x^{19} + x^{20} + x^{21} + x^{22}$$
$$+ x^{23} + x^{24}$$

Il convient de noter qu'on travaille dans le corps de Galois GF(2) comportant deux éléments, à savoir les éléments 0 et 1. Dans GF(2), une addition correspond à l'opération « OU logique » (XOR) et une multiplication correspond à l'opération « ET logique » (AND).

Notons $N_b$ le nombre de bits dans le bloc de données d'un message ADS-B ($N_b$ = 112), et $N_d$ le nombre de bits de données utiles inclus dans ledit bloc de données ($N_d$ = 88).

La matrice de génération du CRC est la matrice G = [$g_{i,j}$] telle que pour des données utiles d = ($d_1$, $d_2$, ..., $d_{Nd}$), le bloc de données b = ($b_1$, $b_2$, ..., $b_{Nb}$) est tel que b = d.G.

Il est possible de déterminer la matrice de génération G = [$g_{i,j}$] du CRC en résolvant le système d'équations linéaires suivant en générant au moins ($N_b$ + 1) blocs de données différents :

[Math. 6]

$$\sum_{i=1}^{N_d} d_{k,i} \cdot g_{i,j} = b_{k,j}$$

La matrice de génération G = [$g_{i,j}$] comporte $N_d$ lignes et $N_b$ colonnes. G peut s'écrire sous la forme G = [ I | P ], où I est la matrice Identité, et P est une matrice comportant $N_d$ lignes et ($N_b$ - $N_d$) colonnes.

La matrice de parité H est le noyau de la matrice de génération G, ce qui signifie que $G.H^T$ = 0 ($H^T$ est la transposée de la matrice H). Autrement dit, pour un bloc de données b = ($b_1$, $b_2$, ..., $b_{Nb}$), on a $b.H^T$=0 ou $H.b^T$ = 0. Il est connu que la matrice de parité H associé au CRC est la matrice H = [ $P^T$ | I ], où $P^T$ est la transposée de la matrice P. La matrice de parité H du code CRC comporte ($N_b$ - $N_d$) lignes et $N_b$ colonnes. La matrice de parité H du code CRC est représentée à la figure 13. Sur la figure 13, chaque point dans la matrice correspond à un 1, et une absence de point pour un élément de la matrice correspond à un 0.

La phase 70 de décodage comporte une étape de détermination 71, à partir de l'échantillon de départ, d'une séquence de rapports de vraisemblance logarithmiques associés respectivement aux symboles du bloc de données du message. Si l'échantillon de départ est l'échantillon $E_{No}$ d'indice $N_0$, alors le premier échantillon du premier symbole du bloc de données est l'échantillon $E_{No+Np.Ne}$ d'indice ($N_0$ + $N_p.N_e$). La séquence comporte cent-douze (112) rapports de vraisemblance logarithmiques associés respectivement aux symboles du bloc de données du message. Chaque rapport de vraisemblance logarithmique est calculé de manière similaire à ce qui a été fait précédemment pour les symboles du préambule pendant la phase 60 de synchronisation.

Notons $S_B$ la séquence de rapports de vraisemblance logarithmiques associés respectivement aux symboles du bloc de données du message. Notons $LLR_n$ un rapport de vraisemblance logarithmique d'indice n de la séquence $S_B$. $N_b$ est le nombre de symboles du bloc de données du message ($N_b$ = 112). Alors la séquence $S_B$ s'écrit sous la forme $S_B = (LLR_1, LLR_2, LLR_3, ..., LLR_{Nb})$ avec :

[Math. 6]

$$LLR_n = Log\left(\frac{P_n^1}{P_n^{-1}}\right)$$

[Math. 7]

$$P_n^1 = \frac{1}{C} \cdot \sum_{k=1}^{N_e} E_{N_0 + N_p \cdot N_e + (n-1) \cdot N_e + (k-1)} \cdot H_k$$

[Math. 8]

$$P_n^{-1} = \frac{1}{C} \cdot \sum_{k=1}^{N_e} E_{N_0 + N_p \cdot N_e + (n-1) \cdot N_e + (k-1)} \cdot L_k$$

La phase 70 de décodage comporte ensuite une étape d'ordonnancement 72 de la séquence $S_B$ par ordre croissant en valeur absolue. Autrement dit, les rapports de vraisemblance logarithmiques $LLR_n$ de la séquence $S_B$ sont classés du rapport de vraisemblance logarithmique ayant la plus faible valeur absolue au rapport de vraisemblance logarithmique ayant la plus grande valeur absolue. En d'autres termes, les éléments de la séquence $S_B$ sont classés par ordre croissant de la confiance accordée audit élément (pour rappel, plus la valeur absolue d'un rapport de vraisemblance logarithmique est grande, et plus la confiance accordée à la décision sur la valeur du symbole associée, indiquée par le signe dudit rapport, est grande). La séquence ordonnée obtenue est notée $S_B'$.

A l'étape 73, les colonnes de la matrice de parité H du code de contrôle de redondance cyclique sont permutées de façon cohérente avec les permutations effectuées pour ordonner la séquence $S_B$ de rapports de vraisemblance logarithmiques. Cela signifie que les colonnes de la matrice de parité H sont permutées de la même façon que les éléments de la séquence $S_B$ ont été permutés. Autrement dit, si un élément $LLR_k$ à la position k dans la séquence $S_B$ se trouve à la position k' dans la séquence ordonnée $S_B'$ après l'étape d'ordonnancement 72, alors la colonne k de la matrice H devient la colonne k' de la matrice permutée après l'étape de permutation 73. Notons Π un opérateur mathématique correspondant à la permutation des colonnes de la matrice de parité H. La nouvelle position k' d'une colonne de la matrice permutée correspondant à la colonne initialement à la position k dans la matrice de parité est telle que k' = Π(k).

La phase 70 de décodage comporte ensuite une étape de transformation 74 de la matrice permutée par une réduction sous forme échelonnée d'une sous-partie de ladite matrice permutée, afin d'obtenir une matrice dite « matrice transformée ». Une matrice est dite échelonnée si le nombre de zéros précédant la première valeur non nulle d'une ligne augmente ligne par ligne jusqu'à ce qu'il ne reste éventuellement plus que des zéros.

Par exemple, la sous-matrice carrée correspondant aux ($N_b$ - $N_d$) lignes et aux ($N_b$ - $N_d$) premières colonnes de la matrice permutée peut être réduite sous forme échelonnée au moyen d'opérations élémentaires sur les lignes. Une telle procédure est par exemple connue sous le nom d' « élimination gaussienne ».

La phase 70 de décodage comporte ensuite une étape de permutation inverse 75 des colonnes de la matrice transformée pour remettre les colonnes dans leur ordre initial, afin d'obtenir une matrice dite « matrice de parité optimisée ». Autrement dit, on applique l'opérateur inverse $\Pi^{-1}$, de sorte que, après l'étape de permutation inverse 75, la nouvelle position $\Pi^{-1}(k')$ d'une colonne de la matrice de parité optimisée correspondant à la colonne à la position k' dans la matrice transformée est la position k initiale de la colonne dans la matrice de parité originale.

La matrice obtenue est une matrice de parité optimisée dans la mesure où sa densité a été réduite. La réduction sous forme échelonnée d'une partie de la matrice de parité permutée a en effet permis de réduire la proportion de 1 parmi l'ensemble des éléments de la matrice.

La phase 70 de décodage comporte enfin une application 76 d'un algorithme de propagation des croyances utilisant la matrice de parité optimisée et la séquence $S_B$ de rapports de vraisemblance logarithmiques pour déterminer un train de bits correspondant au bloc de données du message. Cet algorithme est appliqué de façon conventionnelle.

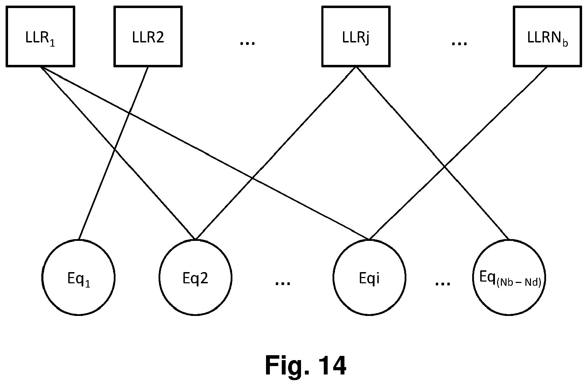

Les étapes 72 à 75 de la phase 70 de décodage sont équivalentes à couper certaines connexions entre des noeuds de variables (les rapports de vraisemblance logarithmiques $LLR_n$) et des noeuds de parité (les équations de parité) d'un graphe biparti sur lequel repose l'algorithme de propagation des croyances. Un tel graphe est illustré à la figure 14. Sur un tel graphe, un noeud de parité $Eq_i$ est relié à un noeud de variable $LLR_j$ si et seulement si l'élément à la ligne i et à la colonne j de la matrice de parité utilisée vaut 1. Notamment, des connexions correspondant aux rapports de vraisemblance logarithmiques de faible valeur absolue, pour lesquels les croyances sont faibles, sont supprimées. Cela permet de minimiser l'impact d'éléments pour lesquels la confiance de décision est faible sur le processus de l'algorithme de propagation des croyances. Ainsi, le graphe n'est pas pollué avec des décisions trop hasardeuses.

Avec de telles dispositions, la phase 70 de décodage permet de décoder correctement le bloc de données d'un message ADS-B dans 99% des cas lorsque le rapport signal sur bruit vaut environ 8,5 dB. Un tel taux de décodage d'un bloc de données d'un message ADS-B n'est atteint par les méthodes conventionnelles de l'art antérieur que pour un rapport signal sur bruit d'environ 12 dB. Le procédé 50 selon l'invention permet donc un gain de plus de 3 dB par rapport aux méthodes de l'art antérieur pour décoder un message ADS-B.

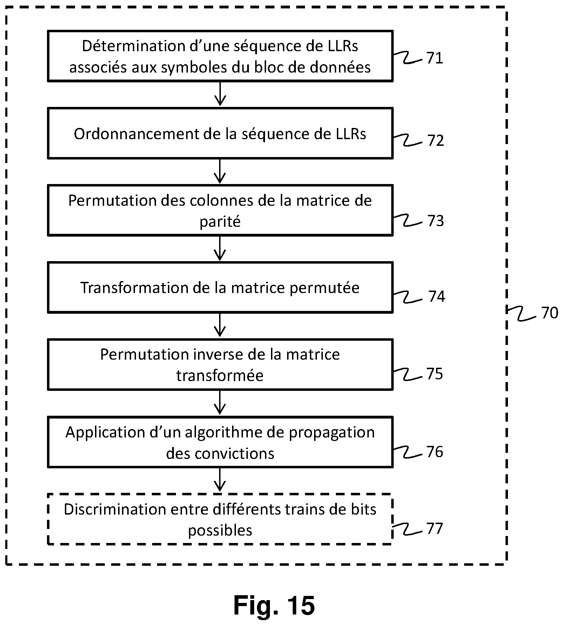

La figure 15 représente un mode particulier de mise en oeuvre de la phase 70 de décodage. Outre les étapes déjà décrites précédemment en référence à la phase 70 de décodage représentée à la figure 3, la phase 70 de synchronisation représentée à la figure 15 comporte une étape supplémentaire de discrimination 77 entre plusieurs trains de bits possibles obtenus en sortie de l'algorithme de propagation des croyances appliqué à l'étape 76 de la phase 70 de décodage du procédé 50 de réception.

La discrimination 77 est effectuée en fonction de la distance de Hamming entre un train de bits candidat obtenu en sortie de l'algorithme de propagation des croyances, et un train de bits supposé correspondant à la séquence de rapports de vraisemblance logarithmiques associés aux symboles du bloc de données. En effet, l'algorithme de propagation des croyances peut aboutir à plusieurs train de bits candidat vérifiant la relation $H'.b^T = 0$ (H' étant la matrice de parité optimisée et b étant un train de bit candidat).

La distance de Hamming entre deux trains de bits de même longueur est le nombre de bits pour lesquels les deux trains de bits diffèrent.

Le train de bits supposé correspond à la séquence $S_B$ de rapports de vraisemblance logarithmiques associés aux symboles du bloc de données. Il est obtenu en considérant qu'un rapport de vraisemblance logarithmique ayant une valeur positive correspond à un bit de valeur 1 et qu'un rapport de vraisemblance logarithmique ayant une valeur négative correspond à un bit de valeur 0.

Par exemple, il est possible d'éliminer un train de bits candidat (obtenu en sortie de l'algorithme de croyances) qui a une distance de Hamming avec le train de bits supposé (obtenu d'après la séquence $S_B$) supérieure à $\left\lfloor \frac{d_{min}-1}{2} \right\rfloor$

($d_{min}$ étant la distance minimale de Hamming du code CRC, et $\lfloor A \rfloor$ correspondant à la partie entière plancher de A).

Selon un autre exemple, il est possible, par exemple, de choisir comme résultat de la phase 70 de décodage le train de bits candidat (obtenu en sortie de l'algorithme de croyances) qui a la plus faible distance de Hamming avec le train de bits supposé (obtenu d'après la séquence $S_B$).

La description ci-avant illustre clairement que, par ses différentes caractéristiques et leurs avantages, la présente invention atteint les objectifs fixés.

En particulier, la phase 60 de synchronisation basée sur des rapports de vraisemblance logarithmiques pour les symboles du préambule permet de détecter le début d'un message ADS-B pour un rapport signal sur bruit particulièrement bas par rapport à ce qu'il est possible de faire avec des méthodes conventionnelles de réception d'un message ADS-B. En effet, les méthodes conventionnelles de synchronisation d'un message ADS-B sont basées sur une corrélation classique entre le signal reçu et un signal de référence correspondant au préambule attendu. Comme le préambule est court et qu'il ne comporte que peu de puissance (le préambule comporte seulement quatre pulses de 0,5 µs pour une durée du préambule de 8 µs), une telle corrélation peut générer de nombreux faux positifs de détection lorsque le rapport signal sur bruit est bas (par exemple de l'ordre de 8 dB).

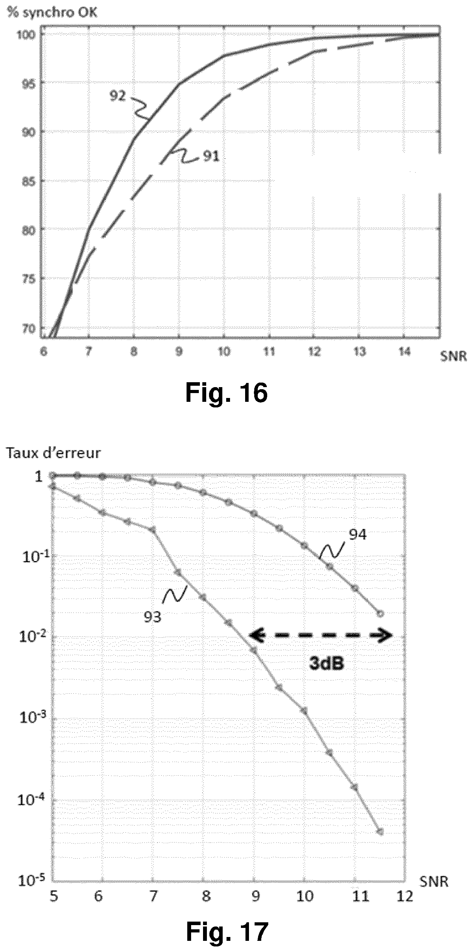

Sur la figure 16, la courbe 91 représente un taux de synchronisation correcte d'un message ADS-B avec une corrélation classique utilisée dans les méthodes conventionnelles. La courbe 92 représente un taux de synchronisation correcte d'un message ADS-B avec la phase 60 de synchronisation du procédé 50 selon l'invention. On peut voir sur la figure 16 que pour un SNR de 8 dB, la phase 60 de synchronisation du procédé 50 selon l'invention permet d'atteindre un taux de synchronisation correcte d'environ 90%, alors qu'une méthode conventionnelle permet seulement d'atteindre un taux de synchronisation correcte de 83% environ.

D'autre part, la phase 70 de décodage permet de profiter du CRC du message ADS-B pour corriger d'éventuelles erreurs de décodage du bloc de données du message. Un CRC n'est conventionnellement pas adapté pour corriger des erreurs de décodage, mais seulement pour vérifier l'intégrité des données décodées. Toutefois, grâce aux différentes étapes permettant d'optimiser la matrice de parité du CRC en réduisant sa densité, la phase 70 de décodage du procédé 50 de réception selon l'invention permet d'utiliser un algorithme de propagation des convictions se basant sur ladite matrice de parité optimisée. De telles dispositions permettent de décoder un message ADS-B même s'il est reçu avec un rapport signal sur bruit particulièrement bas (par exemple de l'ordre de 8 dB).

Sur la figure 17, la courbe 94 représente un taux d'erreur de décodage d'un bloc de données d'un message ADS-B avec une méthode conventionnelle n'utilisant le CRC que pour vérifier l'intégrité du bloc de données. La courbe 93 représente le taux d'erreur de décodage avec la phase 70 de décodage du procédé 50 selon l'invention. On peut voir sur la figure 17 que pour un SNR de 8 dB, la phase 70 de décodage du procédé 50 selon l'invention permet d'atteindre un taux d'erreur de décodage de l'ordre de 2%, alors qu'une méthode conventionnelle présente un taux d'erreur de décodage de 60% environ.

De manière générale, il est à noter que les modes de mise en oeuvre et de réalisation considérés ci-dessus ont été décrits à titre d'exemples non limitatifs, et que d'autres variantes sont par conséquent envisageables.

Notamment, différents choix sont envisageables pour le facteur de sur-échantillonnage du signal, pour le nombre d'échantillons successifs considérés dans la phase 60 de synchronisation, pour le nombre de séquences candidates sélectionnées et la manière dont lesdites séquences candidates sont sélectionnées en fonction des valeurs des rapports de vraisemblance logarithmiques qu'elles comportent, etc. De tels choix ne correspondent qu'à des variantes de l'invention.

Il convient également de noter que dans le procédé 50 de réception selon l'invention, la phase 60 de synchronisation et la phase 70 de décodage peuvent être indépendantes l'une de l'autre. Autrement dit, il est envisageable de mettre en oeuvre un procédé de réception d'un message qui comporte la phase 60 de synchronisation selon l'invention, et qui comporte une phase de décodage différente de la phase 70 de décodage selon l'invention, par exemple une méthode conventionnelle de décodage qui n'utilise pas d'algorithme de propagation des croyances. Similairement, il est envisageable de mettre en oeuvre un procédé de réception d'un message qui comporte la phase 70 de décodage selon l'invention, et qui comporte une phase de synchronisation différente de la phase 60 de synchronisation selon l'invention, par exemple une méthode conventionnelle de synchronisation basée sur une corrélation de signal. Il en va de même pour le module 21 de synchronisation et le module 22 de décodage : ces deux modules sont indépendants l'un de l'autre. Il est ainsi envisageable de réaliser un dispositif 20 de réception qui comporte un module 21 de synchronisation selon l'invention et un module de décodage différent du module 22 de décodage selon l'invention. Similairement, il est envisageable de réaliser un dispositif 20 de réception qui comporte un module 22 de décodage selon l'invention et un module de synchronisation différent du module 21 de synchronisation selon l'invention.

Il est aussi à noter qu'il peut être envisagé d'adapter l'invention à d'autres protocoles de communication sans fil utilisant une modulation par position d'impulsion et un code de contrôle de redondance cyclique.

L'invention a été décrite à titre d'exemple pour un dispositif 20 de réception d'un message ADS-B embarqué dans une charge utile d'un satellite en orbite LEO. Rien n'exclut cependant d'appliquer l'invention à un satellite en orbite MEO, voire en orbite GEO, si les performances des antennes desdits satellites permettent de recevoir un tel message. Rien n'exclut non plus d'appliquer l'invention à d'autres récepteurs comme par exemple une station au sol ou un autre avion.

## Revendications

1. Procédé (50) de réception d'un message de surveillance dépendante automatique en mode diffusion, ou ADS-B, ledit message étant transporté par un signal radio et comportant un préambule et un bloc de données codés par des symboles modulés par position d'impulsion, le bloc de données comportant un code de contrôle de redondance cyclique, ledit procédé (50) de réception comportant une phase (60) de synchronisation permettant de détecter le début du message, et une phase (70) de décodage permettant de récupérer un train de bits correspondant au bloc de données du message,
ledit procédé (50) étant **caractérisé en ce que** :

la phase (60) de synchronisation comporte :

- un échantillonnage (61) du signal radio avec une fréquence d'échantillonnage au moins égale à deux fois la fréquence d'émission des symboles du message,
- pour chaque échantillon d'un nombre prédéterminé d'échantillons successifs, une détermination (62) d'une séquence de rapports de vraisemblance logarithmiques, chaque rapport de vraisemblance logarithmique correspondant à un rapport entre les probabilités respectives qu'un symbole du signal reçu corresponde à une parmi deux valeurs possibles pour un symbole, chaque séquence étant déterminée en faisant l'hypothèse que ledit échantillon correspond au début du message,
- une sélection (63) de séquences candidates en fonction des valeurs de rapports de vraisemblance logarithmiques desdites séquences ainsi déterminées, chaque séquence candidate étant associée à un échantillon candidat pouvant correspondre au début du message,
- pour chaque séquence candidate sélectionnée, un calcul (64) d'une valeur de vraisemblance entre ladite séquence candidate et une séquence attendue de symboles du préambule,
- une détermination (65) en fonction des valeurs de vraisemblance ainsi calculées, d'un échantillon, dit « échantillon de départ », correspondant au début du message,

la phase (70) de décodage comporte :

- une détermination (71), à partir de l'échantillon de départ, d'une séquence de rapports de vraisemblance logarithmiques associés respectivement aux symboles du bloc de données du message,
- un ordonnancement (71) de la séquence de rapports de vraisemblance logarithmiques associés aux symboles du bloc de données par ordre croissant en valeur absolue,
- une permutation (72) des colonnes d'une matrice de parité du code de contrôle de redondance cyclique, ladite permutation (72) étant réalisée de façon cohérente avec les permutations effectuées pour ordonner la séquence de rapports de vraisemblance logarithmiques, afin d'obtenir une matrice dite « matrice permutée »,
- une transformation (73) de la matrice permutée par réduction sous forme échelonnée d'une sous-partie de ladite matrice permutée, afin d'obtenir une matrice dite « matrice transformée »,
- une permutation inverse (74) des colonnes de la matrice transformée pour remettre les colonnes dans leur ordre initial, afin d'obtenir une matrice dite « matrice de parité optimisée »,
- une application (75) d'un algorithme de propagation des croyances utilisant la matrice de parité optimisée et la séquence de rapports de vraisemblance logarithmiques pour déterminer un train de bits correspondant au bloc de données du message.

2. Procédé (50) selon la revendication 1 dans lequel, pendant la phase (60) de synchronisation, les séquences candidates sélectionnées correspondent aux séquences comportant les plus grandes valeurs absolues de rapports de vraisemblance logarithmiques parmi tous les rapports de vraisemblance logarithmiques de toutes les séquences déterminées.

3. Procédé (60) selon la revendication 1 dans lequel, pendant la phase (60) de synchronisation, les séquences candidates sélectionnées correspondent aux séquences pour lesquelles les sommes des valeurs absolues des rapports de vraisemblance logarithmiques sont les plus grandes.

4. Procédé (50) selon l'une des revendications 1 à 3 dans lequel l'échantillon de départ est déterminé comme étant l'échantillon associé à la séquence candidate pour laquelle la valeur de vraisemblance calculée est la plus grande.

5. Procédé (50) selon l'une des revendications 1 à 4 comportant en outre une discrimination (66) entre différentes séquences candidates en exploitant des parties du préambule ne comportant pas d'impulsion.

6. Procédé (50) selon la revendication 5 dans lequel la discrimination (66) comporte un calcul d'une somme, pour chaque séquence candidate :

- pour chaque symbole de ladite séquence candidate supposé correspondre à un symbole du préambule ne comportant pas d'impulsion, des valeurs de la moitié des échantillons ayant les plus grandes valeurs,
- pour chaque symbole de ladite séquence candidate supposé correspondre à un symbole du préambule comportant une impulsion, des valeurs de la moitié des échantillons ayant les plus faibles valeurs,

les séquences candidates pour lesquelles les sommes ainsi calculées sont les plus faibles étant considérées comme les plus vraisemblables.

7. Procédé (50) selon l'une des revendications 1 à 6 comportant en outre une discrimination entre différents trains de bits possibles obtenus en sortie de l'algorithme de propagation des croyances pour le bloc de données du message en fonction de la distance de Hamming entre un train de bits possible et un train de bits correspondant à la séquence de rapports de vraisemblance logarithmiques associés aux symboles du bloc de données.

8. Dispositif (20) de réception d'un message de surveillance dépendante automatique en mode diffusion, ou ADS-B, ledit message étant transporté par un signal radio et comportant un préambule et un bloc de données codés par des symboles modulés par position d'impulsion, le bloc de données comportant un code de contrôle de redondance cyclique, ledit dispositif (20) de réception comportant un module (21) de synchronisation configuré pour détecter le début du message, et un module (22) de décodage configuré pour récupérer un train de bits correspondant au bloc de données du message,

ledit dispositif (20) étant **caractérisé en ce que** :

le module (21) de synchronisation est configuré pour :

- échantillonner le signal radio avec une fréquence d'échantillonnage au moins égale à deux fois la fréquence d'émission des symboles du message,
- pour chaque échantillon d'un nombre prédéterminé d'échantillons successifs, déterminer une séquence de rapports de vraisemblance logarithmiques, chaque rapport de vraisemblance logarithmique correspondant à un rapport entre les probabilités respectives qu'un symbole du signal reçu corresponde à une parmi deux valeurs possibles pour un symbole, chaque séquence étant déterminée en faisant l'hypothèse que ledit échantillon correspond au début du message,
- sélectionner des séquences candidates en fonction des valeurs de rapports de vraisemblance logarithmiques desdites séquences ainsi déterminées, chaque séquence candidate étant associée à un échantillon candidat pouvant correspondre au début du message,
- pour chaque séquence candidate sélectionnée, calculer une valeur de vraisemblance entre ladite séquence candidate et une séquence attendue de symboles du préambule,
- déterminer en fonction des valeurs de vraisemblance ainsi calculées, un échantillon, dit « échantillon de départ », correspondant au début du message,

le module (22) de décodage est configuré pour :

- déterminer, à partir de l'échantillon de départ, une séquence de rapports de vraisemblance logarithmiques associés respectivement aux symboles du bloc de données du message,
- ordonner la séquence de rapports de vraisemblance logarithmiques associés aux symboles du bloc de données par ordre croissant en valeur absolue,
- permuter des colonnes d'une matrice de parité du code de contrôle de redondance cyclique, la permutation étant réalisée de façon cohérente avec les permutations effectuées pour ordonner la séquence de rapports de vraisemblance logarithmiques, afin d'obtenir une matrice dite « matrice permutée »,
- transformer la matrice permutée par une réduction sous forme échelonnée d'une sous-partie de la matrice permutée, afin d'obtenir une matrice dite « matrice transformée »,
- permuter à l'inverse les colonnes de la matrice transformée pour remettre les colonnes dans leur ordre initial, afin d'obtenir une matrice dite « matrice de parité optimisée »,
- appliquer un algorithme de propagation des croyances utilisant la matrice de parité optimisée et la séquence de rapports de vraisemblance logarithmiques pour déterminer un train de bits correspondant au bloc de données du message.

9. Charge utile de satellite comportant un dispositif (20) de réception selon la revendication 8.


## Patentansprüche

1. Verfahren (50) zum Empfang einer automatischen abhängigen Überwachungsnachricht im Übertragungs- oder ADS-B-Modus, wobei die Nachricht durch ein Funksignal transportiert wird und eine Präambel und einen Datenblock beinhaltet, der durch impulspositionsmodulierte Symbole codiert ist, wobei der Datenblock einen zyklischen Redundanzprüfungscode beinhaltet, wobei das Empfangsverfahren (50) eine Synchronisierungsphase (60) beinhaltet, die das Erkennen des Anfangs der Nachricht ermöglicht, und eine Decodierungsphase (70), die das Abrufen eines Bitstroms ermöglicht, der dem Datenblock der Nachricht entspricht, wobei das Verfahren (50) **dadurch gekennzeichnet ist, dass**:

die Synchronisierungsphase (60) beinhaltet:

- eine Abtastung (61) des Funksignals mit einer Abtastfrequenz, die mindestens gleich ist wie die doppelte Sendefrequenz der Nachrichtensymbole,
- für jeden Abtastwert einer vorbestimmten Anzahl aufeinanderfolgender Abtastwerte, eine Bestimmung (62) einer Sequenz logarithmischer Wahrscheinlichkeitsverhältnisse, wobei jedes logarithmische Wahrscheinlichkeitsverhältnis einem Verhältnis der jeweiligen Wahrscheinlichkeiten entspricht, dass ein Symbol des empfangenen Signals einem von zwei möglichen Werten für ein Symbol entspricht, wobei jede Sequenz unter der Annahme bestimmt wird, dass der Abtastwert dem Anfang der Nachricht entspricht,

- eine Auswahl (63) von Kandidaten-Sequenzen in Abhängigkeit der Werte der logarithmischen Wahrscheinlichkeitsverhältnisse der so bestimmten Sequenzen, wobei jede Kandidaten-Sequenz mit einem Kandidaten-Abtastwert assoziiert ist, der dem Anfang der Nachricht entsprechen kann,

- für jede ausgewählte Kandidaten-Sequenz, eine Berechnung (64) eines Wahrscheinlichkeitswerts zwischen der Kandidaten-Sequenz und einer erwarteten Sequenz von Präambelsymbolen,

- eine Bestimmung (65), in Abhängigkeit von den so berechneten Wahrscheinlichkeitswerten, eines Abtastwerts, "Startabtastwert" genannt, der dem Anfang der Nachricht entspricht,

die Decodierungsphase (70) beinhaltet:

- eine Bestimmung (71), ausgehend vom Startabtastwert, von einer Sequenz logarithmischer Wahrscheinlichkeitsverhältnisse, die jeweils mit den Symbolen des Datenblocks der Nachricht assoziiert sind,

- eine Ordnung (71) der Sequenz logarithmischer Wahrscheinlichkeitsverhältnisse, die mit den Symbolen des Datenblocks assoziiert sind, in aufsteigender Reihenfolge von absoluten Werten,

- eine Permutation (72) der Spalten einer Paritätsmatrix des zyklischen Redundanzprüfungscodes, wobei die Permutation (72) in einer Weise durchgeführt wird, die mit den Permutationen kohärent ist, die vorgenommen werden, um die Sequenz der logarithmischen Wahrscheinlichkeitsverhältnisse zu ordnen, um eine Matrix, "permutierte Matrix" genannt, zu erhalten,

- eine Transformation (73) der permutierten Matrix durch stufenweise Reduktion eines Unterabschnitts der permutierten Matrix, um eine Matrix, "transformierte Matrix" genannt, zu erhalten,

- eine umgekehrte Permutation (74) der Spalten der transformierten Matrix, um die Spalten wieder in ihre ursprüngliche Reihenfolge zu bringen, um eine Matrix, "optimierte Paritätsmatrix" genannt, zu erhalten,

- eine Anwendung (75) eines Glaubensverbreitungs-Algorithmus unter Verwendung der optimierten Paritätsmatrix und der Sequenz logarithmischer Wahrscheinlichkeitsverhältnisse, um einen Bitstrom zu bestimmen, der dem Datenblock der Nachricht entspricht.

2. Verfahren (50) nach Anspruch 1, wobei, während der Synchronisierungsphase (60), die ausgewählten Kandidaten-Sequenzen den Sequenzen entsprechen, die die größten absoluten Werte logarithmischer Wahrscheinlichkeitsverhältnisse unter allen logarithmischen Wahrscheinlichkeitsverhältnissen aller bestimmten Sequenzen beinhalten.

3. Verfahren (60) nach Anspruch 1, wobei, während der Synchronisierungsphase (60), die ausgewählten Kandidaten-Sequenzen den Sequenzen entsprechen, für die die Summen der absoluten Werte der logarithmischen Wahrscheinlichkeitsverhältnisse am größten sind.

4. Verfahren (50) nach einem der Ansprüche 1 bis 3, wobei der Startabtastwert als der Abtastwert bestimmt wird, der mit der Kandidaten-Sequenz assoziiert ist, für die der berechnete Wahrscheinlichkeitswert am größten ist.

5. Verfahren (50) nach einem der Ansprüche 1 bis 4, das ferner eine Diskriminierung (66) zwischen verschiedenen Kandidaten-Sequenzen beinhaltet, durch Ausnutzung von Teilen der Präambel, die keinen Impuls beinhalten.

6. Verfahren (50) nach Anspruch 5, wobei die Diskriminierung (66) eine Berechnung einer Summe für jede Kandidaten-Sequenz beinhaltet:

- für jedes Symbol der Kandidaten-Sequenz, von dem angenommen wird, dass es einem Präambelsymbol entspricht, das keinen Impuls beinhaltet, Werte von der Hälfte der Abtastwerte mit den größten Werten,

- für jedes Symbol der Kandidaten-Sequenz, von dem angenommen wird, dass es einem Präambelsymbol entspricht, das einen Impuls beinhaltet, Werte von der Hälfte der Abtastwerte mit den niedrigsten Werten,

die Kandidaten-Sequenzen, für die die so berechneten Summen am niedrigsten sind, gelten als die wahrscheinlichsten.

7. Verfahren (50) nach einem der Ansprüche 1 bis 6, das ferner eine Diskriminierung zwischen verschiedenen möglichen Bitströmen beinhaltet, die am Ausgang des Glaubensverbreitungs-Algorithmus für den Datenblock der Nachricht erhalten wurden in Abhängigkeit vom Hamming-Abstand zwischen einem möglichen Bitstrom und einem Bitstrom, der der Sequenz logarithmischer Wahrscheinlichkeitsverhältnisse entspricht, die mit den Symbolen des Datenblocks assoziiert sind.

8. Vorrichtung (20) zum Empfang einer automatischen abhängigen Überwachungsnachricht im Übertragungs- oder ADS-B-Modus, wobei die Nachricht durch ein Funksignal transportiert wird und eine Präambel und einen Datenblock beinhaltet, der durch impulspositionsmodulierte Symbole codiert ist, wobei der Datenblock einen zyklischen Redundanzprüfungscode beinhaltet, wobei die Empfangsvorrichtung (20) ein Synchronisierungsmodul (21) beinhaltet, das konfiguriert ist, um den Anfang der Nachricht zu erkennen, und ein Decodierungsmodul (22), das konfiguriert ist, um einen Bitstrom abzurufen, der dem Datenblock der Nachricht entspricht,
wobei die Vorrichtung (20) **dadurch gekennzeichnet ist, dass**:

das Synchronisierungsmodul (21) konfiguriert ist, zum:

- Abtasten des Funksignals mit einer Abtastfrequenz, die mindestens die doppelte der Sendefrequenz der Nachrichtensymbole ist,
- für jeden Abtastwert einer vorbestimmten Anzahl aufeinanderfolgender Abtastwerte, Bestimmen einer Sequenz logarithmischer Wahrscheinlichkeitsverhältnisse, wobei jedes logarithmische Wahrscheinlichkeitsverhältnis einem Verhältnis der jeweiligen Wahrscheinlichkeiten entspricht, dass ein Symbol des empfangenen Signals einem von zwei möglichen Werten für ein Symbol entspricht, wobei jede Sequenz unter der Annahme bestimmt wird, dass der Abtastwert dem Anfang der Nachricht entspricht,
- Auswählen von Kandidaten-Sequenzen in Abhängigkeit der Werte der logarithmischen Wahrscheinlichkeitsverhältnisse der so bestimmten Sequenzen, wobei jede Kandidaten-Sequenz mit einem Kandidaten-Abtastwert assoziiert ist, der dem Anfang der Nachricht entsprechen kann,
- für jede ausgewählte Kandidaten-Sequenz, Berechnen eines Wahrscheinlichkeitswerts zwischen der Kandidaten-Sequenz und einer erwarteten Sequenz von Präambelsymbolen,
- Bestimmen, in Abhängigkeit von den so berechneten Wahrscheinlichkeitswerten, eines Abtastwerts, "Startabtastwert" genannt, der dem Anfang der Nachricht entspricht, wobei das Decodierungsmodul (22) konfiguriert ist, zum:

- Bestimmen, ausgehend vom Startabtastwert, einer Sequenz von logarithmischen Wahrscheinlichkeitsverhältnissen, die jeweils mit den Symbolen des Datenblocks der Nachricht assoziiert sind,
- Ordnen der Sequenz von logarithmischen Wahrscheinlichkeitsverhältnissen, die mit den Symbolen des Datenblocks assoziiert sind, in aufsteigender Reihenfolge von absoluten Werten,
- Permutieren der Spalten einer Paritätsmatrix des zyklischen Redundanzprüfungscodes, wobei die Permutation in einer Weise durchgeführt wird, die mit den Permutationen kohärent ist, die vorgenommen werden, um die Sequenz der logarithmischen Wahrscheinlichkeitsverhältnisse zu ordnen, um eine Matrix, "permutierte Matrix" genannt, zu erhalten,
- Transformieren der permutierten Matrix durch eine stufenweise Reduktion eines Unterabschnitts der permutierten Matrix, um eine Matrix, "transformierte Matrix" genannt, zu erhalten,
- umgekehrtes Permutieren der Spalten der transformierten Matrix, um die Spalten wieder in ihre ursprüngliche Reihenfolge zu bringen, um eine Matrix, "optimierte Paritätsmatrix" genannt, zu erhalten,
- Anwenden eines Glaubensverbreitungs-Algorithmus unter Verwendung der optimierten Paritätsmatrix und der Sequenz logarithmischer Wahrscheinlichkeitsverhältnisse, um einen Bitstrom zu bestimmen, der dem Datenblock der Nachricht entspricht.

9. Satellitennutzlast, eine Empfangsvorrichtung (20) nach Anspruch 8 beinhaltend.

**Claims**

1. A method (50) for receiving an automatic dependent surveillance-broadcast message, or ADS-B message, said message being transported by a radio signal and including a preamble and a block of data encoded by symbols modulated by pulse position, the block of data including a cyclic redundancy check code, said reception method (50) including a synchronization phase (60) for detecting the start of the message, and a decoding phase (70) for recovering a bit stream corresponding to the block of data in the message,
said method (50) being **characterized in that:**

the synchronization phase (60) includes:

- a sampling (61) of the radio signal with a sampling frequency at least equal to twice the emission frequency of the symbols of the message,
- for each sample of a predetermined number of successive samples, a determination (62) of a sequence of log-likelihood ratios, each log-likelihood ratio corresponding to a ratio between the respective probabilities that a symbol of the received signal corresponds to one of two possible values for a symbol, each sequence being determined by assuming that said sample corresponds to the start of the message,
- a selection (63) of candidate sequences based on the values of log-likelihood ratios of said sequences thus determined, each candidate sequence being associated with a candidate sample which may correspond to the start of the message,
- for each selected candidate sequence, a calculation (64) of a likelihood value between said candidate sequence and a sequence of symbols expected for the preamble,
- a determination (65) based on the likelihood values thus calculated, of a sample, called the "starting sample", corresponding to the start of the message,

the decoding phase (70) includes:

- a determination (71), from the starting sample, of a sequence of log-likelihood ratios associated respectively with the symbols of the block of data in the message,
- an ordering (71) of the sequence of log-likelihood ratios associated with the symbols of the block of data in ascending order in absolute value,
- a permutation (72) of the columns of a parity matrix of the cyclic redundancy check code, said permutation (72) being carried out in a coherent manner with the permutations carried out to order the sequence of log-likelihood ratios, in order to obtain a matrix called "permuted matrix",
- a transformation (73) of the permuted matrix by reduction in scaled form of a sub-part of said permuted matrix, in order to obtain a matrix called "transformed matrix",
- a reverse permutation (74) of the columns of the transformed matrix to return the columns to their initial order, in order to obtain a matrix called "optimized parity matrix",
- an application (75) of a belief propagation algorithm using the optimized parity matrix and the sequence of log-likelihood ratios to determine a bit stream corresponding to the block of data in the message.

2. The method (50) according to claim 1 wherein, during the synchronization phase (60), the selected candidate sequences correspond to the sequences including the largest absolute values of log-likelihood ratios among all the log-likelihood ratios of all the determined sequences.

3. The method (60) according to claim 1 wherein, during the synchronization phase (60), the selected candidate sequences correspond to the sequences for which the sums of the absolute values of the log-likelihood ratios are the largest.

4. The method (50) according to one of claims 1 to 3 wherein the starting sample is determined as the sample associated with the candidate sequence for which the calculated likelihood value is the greatest.

5. The method (50) according to one of claims 1 to 4 further including a discrimination (66) between different candidate sequences using parts of the preamble not including a pulse.

6. The method (50) according to claim 5 wherein the discrimination (66) includes a calculation of a sum, for each candidate sequence:

- for each symbol of said candidate sequence assumed to correspond to a symbol of the preamble not including a pulse, of the values of half of the samples having the greatest values,
- for each symbol of said candidate sequence assumed to correspond to a symbol of the preamble including a pulse, of the values of half of the samples having the lowest values,

the candidate sequences for which the sums thus calculated are the lowest being considered as the most likely.

7. The method (50) according to one of claims 1 to 6 further including a discrimination between different possible bit streams obtained at the output of the belief propagation algorithm for the block of data in the message based on the Hamming distance between a possible bit stream and a bit stream corresponding to the sequence of log-likelihood ratios associated with the symbols of the block of data.

8. A device (20) for receiving an automatic dependent surveillance-broadcast message, or ADS-B message, said message being transported by a radio signal and including a preamble and a block of data encoded by symbols modulated by pulse position, the block of data including a cyclic redundancy check code, said receiving device (20) including a synchronization module (21) configured to detect the start of the message, and a decoding module (22) configured to recover a bit stream corresponding to the block of data in the message,
said device (20) being **characterized in that:**

the synchronization module (21) is configured for:

- sampling the radio signal with a sampling frequency at least equal to twice the emission frequency of the symbols of the message,
- for each sample of a predetermined number of successive samples, determining a sequence of log-likelihood ratios, each log-likelihood ratio corresponding to a ratio between the respective probabilities that a symbol of the received signal corresponds to one of two possible values for a symbol, each sequence being determined by assuming that said sample corresponds to the start of the message,
- selecting candidate sequences based on the values of log-likelihood ratios of said sequences thus determined, each candidate sequence being associated with a candidate sample which may correspond to the start of the message,
- for each selected candidate sequence, calculating a likelihood value between said candidate sequence and a sequence of symbols expected for the preamble,
- determining, based on the likelihood values thus calculated, a sample, called the "starting sample", corresponding to the start of the message,

the decoding module (22) is configured for:

- determining, from the starting sample, a sequence of log-likelihood ratios associated respectively with the symbols of the block of data in the message,
- ordering the sequence of log-likelihood ratios associated with the symbols of the block of data in ascending order in absolute value,
- permuting columns of a parity matrix of the cyclic redundancy check code, the permutation being carried out in a coherent manner with the permutations carried out to order the sequence of log-likelihood ratios, in order to obtain a matrix called "permuted matrix",
- transforming the permuted matrix by a reduction in scaled form of a sub-part of the permuted matrix, in order to obtain a matrix called "transformed matrix",
- reversely permuting the columns of the transformed matrix to return the columns to their initial order, in order to obtain a matrix called "optimized parity matrix",
- applying a belief propagation algorithm using the optimized parity matrix and the sequence of log-likelihood ratios to determine a bit stream corresponding to the block of data of the message.

9. A satellite payload including a receiving device (20) according to claim 8.

**Fig. 1**

**Fig. 2**

50

60

| Echantillonnage | 61 |

↓

| Détermination de séquences de LLRs | 62 |

↓

| Sélection de séquences candidates | 63 |

↓

| Calcul d'une valeur de vraisemblance pour chaque séquence candidate | 64 |

↓

| Détermination de l'échantillon de départ | 65 |

↓

70

| Détermination d'une séquence de LLRs associés aux symboles du bloc de données | 71 |

↓

| Ordonnancement de la séquence de LLRs | 72 |

↓

| Permutation des colonnes de la matrice de parité | 73 |

↓

| Transformation de la matrice permutée | 74 |

↓

| Permutation inverse de la matrice transformée | 75 |

↓

| Application d'une algorithme de propagation des convictions | 76 |

**Fig. 3**

## Fig. 4

Preambule
8.0 µsec

Bloc de données
112 µsec

| BIT 1 | BIT 2 | BIT 3 | BIT 4 | BIT N-1 | BIT N |

1 0 1 0 1 0 1 0 1 0 1 0

0.0  0.5  1.0    3.5    4.5

TIME (µsec)

8.0    9.0

| 0 | 0 | 1 | 0 | 0 | 0 | 1 |

## Fig. 5

1 µsec

## Fig. 6

1 µsec

## Fig. 7

#1 | #2 | #3 | #4 | #5 | #6 | #7 | #8

1 µsec

**Fig. 8**

**Fig. 9**

**Fig. 10**

Echantillonnage 〜 61

↓

Détermination de séquences de LLRs 〜 62

↓

Sélection de séquences candidates 〜 63

↓

Calcul d'une valeur de vraisemblance pour chaque séquence candidate 〜 64

↓

Discrimination par exploitation des parties sans impulsions du préambule 〜 66

↓

Détermination de l'échantillon de départ 〜 65

〜 60

**Fig. 11**

$N_b$ = 112 bits

$N_d$ = 88 bits

$(N_b - N_d)$ = 24 bits

| Bits de données utiles : d(x) | Bits de parité : p(x) |

Bloc de données : b(x)

## Fig. 12

## Fig. 13

**Fig. 14**

Détermination d'une séquence de LLRs associés aux symboles du bloc de données — 71

Ordonnancement de la séquence de LLRs — 72

Permutation des colonnes de la matrice de parité — 73

Transformation de la matrice permutée — 74

Permutation inverse de la matrice transformée — 75

Application d'un algorithme de propagation des convictions — 76

Discrimination entre différents trains de bits possibles — 77

— 70

**Fig. 15**

Fig. 16

Fig. 17

**EP 3 949 168 B1**

## RÉFÉRENCES CITÉES DANS LA DESCRIPTION

**Documents brevets cités dans la description**

- WO 2008134255 A2

- EP 2738972 A2